# FASCICULE DE BREVET EUROPEEN

(11) **EP 2 976 517 B1**
(45) Date de publication et mention de la délivrance du brevet: **28.11.2018**
(21) Numéro de dépôt: 14710005.1
(22) Date de dépôt: 13.02.2014
(51) Int. Cl.: F02D 41/22, F02N 11/08, F02N 11/10

(54) **DISPOSITIF DE COMMANDE DE REDEMMARRAGE AUTOMATIQUE DE MOTEUR THERMIQUE DE VEHICULE AUTOMOBILE**
VORRICHTUNG ZUR STEUERUNG DES WIEDERANFAHRENS EINES KRAFTFAHRZEUG-VERBRENNUNGSMOTORS
MOTOR VEHICLE COMBUSTION ENGINE AUTOMATIC RESTART CONTROL DEVICE

(30) Priorité: 19.03.2013 FR 1352448
(43) Date de publication de la demande: 27.01.2016
(73) Titulaire: PSA Automobiles SA, 78300 Poissy (FR)
(72) Inventeur: DOUX, Florian, F-26100 Romans Sur Isere (FR); UZAN, Jean Francois, F-92400 Courbevoie (FR); MILAUVRE, Alain, F-78300 Poissy (FR)
(86) Numéro de dépôt international: PCT/FR2014/050288
(87) Numéro de publication internationale: WO 2014/147306

(56) Documents cités:
- DE-A1- 10 022 533
- DE-A1- 19 925 230
- DE-A1-102007 009 831
- DE-A1-102011 004 890
- DE-A1-102012 101 779
- FR-A1- 2 962 770
- JP-A- H0 960 548
- US-A1- 2010 152 995

## Description

L'invention concerne le contrôle et la commande de groupe motopropulseur ou GMP de véhicule automobile. L'invention concerne notamment les groupes motopropulseurs de type hybride par exemple à électricité et hydrocarbure ou encore les groupes motopropulseurs de type STT pour Start and Stop selon la terminologie anglosaxone ou à arrêt et démarrage automatique à l'immobilisation du véhicule. L'invention s'adresse plus particulièrement à la gestion des calages du moteur thermique et aux redémarrages du moteur thermique dans de tels cas.

Sur un groupe motopropulseur hybride ou STT, pendant le cycle de roulage, le moteur thermique ou MTH peut s'arrêter de manière temporaire à des fins de minimisation de consommation carburant et/ou pour de la prestation véhicule à zéro émission ou « ZEV » pour Zero Emission Vehicle en anglais. DE 199 25 230 A1 décrit un dispositif de redémarrage automatique de moteur thermique.

Sur ce type de groupe motopropulseur un superviseur marche-arrêt MTH détermine en fonction de nombreux critères une consigne de marche MTH qui reflète à chaque instant, après une éventuelle période transitoire de (re)démarrage MTH ou d'arrêt MTH, l'état stable dans lequel doit se trouver le moteur thermique afin de satisfaire les besoins du groupe motopropulseur.

En cas de calage du moteur thermique depuis l'état MTH tournant, état dans lequel le moteur thermique est normalement autonome et pilotable en couple, il se produit une constatation d'une sortie de l'état MTH tournant non souhaitée par le contrôle commande c'est-à-dire que malgré un état MTH tournant souhaité par le superviseur marche-arrêt MTH via sa consigne de marche MTH à vraie le régime du moteur thermique décroit vers des valeurs plus faibles pour lesquelles sa capacité à piloter en couple de manière précise n'est plus assurée. Les procédés actuels consistent à faciliter le (re)démarrage du moteur thermique par un apport de couple extérieur comme par un exemple un entrainement du moteur thermique par un alterno-démarreur, un embrayage ou encore un démarreur permettant si possible un réentrainement même en présence de régime non nul.

Les procédés automatiques d'aide au (re)démarrage MTH après un calage MTH usuels se concentrent uniquement sur le « succès temporaire » du (re)démarrage automatique c'est-à-dire qu'ils vérifient l'absence de problématique d'entrainement « insuffisants » du moteur thermique, par exemple courroie alternodémarreur glissante, défaillance électrique de la commande de l'organe, blocage sur compression, et, le cas échéant, ils mettent en place d'autres tentatives d'entrainement. Ce premier type de vérification est réalisé par des diagnostics fonctionnels ou électriques.

On vérifie en outre dans ces procédés l'autonomie « à priori » du moteur thermique, c'est-à-dire la capacité du moteur à fournir du couple au vilebrequin uniquement par ses propres combustions. Cette autonomie est vérifiée généralement sur une fenêtre d'observation restreinte par des critères usuels, comme par exemple une vérification que le régime moteur est supérieur à un seuil qui est fonction de la température d'eau et de la pression atmosphérique, éventuellement pendant une temporisation. On vérifie également dans ces procédés la capacité du système d'injection à injecter, en vérifiant l'absence de verrouillage de l'injection par le dispositif inviolabilité, que la pression dans le rail est suffisante, que la synchronisation du moteur thermique est correcte.

L'invention vise à permettre de mieux prendre en compte l'état de fonctionnement du moteur lors d'un processus de redémarrage automatique du moteur après calage.

Ce but est atteint selon l'invention grâce à un dispositif de commande de redémarrage automatique de moteur thermique de véhicule automobile en cas de calage, le dispositif présentant un nombre maximal autorisé de redémarrages automatiques en cas de calages, caractérisé en ce qu'il comporte un module de détection d'un dysfonctionnement du moteur occasionnant une instabilité permanente d'état tournant du moteur, le dispositif de commande de redémarrage étant configuré pour réduire ledit nombre maximal autorisé de redémarrages automatiques avant atteinte d'un tel nombre maximal autorisé réduit, le dispositif réduisant le nombre maximal autorisé de redémarrages automatiques en cas de détection d'un dysfonctionnement du moteur occasionnant une instabilité permanente d'état tournant du moteur.

Avantageusement, le dispositif comporte un module de détection de calage apte émettre au moins un appel à un module de décompte lequel module de décompte compare un nombre d'appels effectués par le module de détection de calage à un nombre maximal d'appels, l'atteinte du nombre maximal d'appels déclenchant une inhibition de redémarrage automatique.

Avantageusement, le module de détection de calage est configuré pour prendre en compte une détection de dysfonctionnement du moteur occasionnant une instabilité permanente d'état tournant du moteur, le module de détection de calage étant configuré pour émettre un nombre d'appels par détection de calage qui est supérieur au nombre d'appel(s) par détection de calage en absence de détection de dysfonctionnement occasionnant une instabilité permanente d'état tournant du moteur.

Avantageusement, le module de détection de calage effectue un appel par détection de calage en absence de détection de dysfonctionnement occasionnant une instabilité permanente d'état tournant du moteur, et effectue deux appels par détection de calage en cas de détection de dysfonctionnement occasionnant une instabilité permanente d'état tournant du moteur.

Avantageusement, le module de détection de calage est un superviseur de marche et d'arrêt du moteur thermique.

Avantageusement, le module de décompte est un gestionnaire des défauts et des reconfigurations lequel met en oeuvre une gestion des défauts du moteur par reconfiguration d'organes de commande du moteur.

Avantageusement, le dispositif comporte un module de détection de dysfonctionnement occasionnant une instabilité permanente d'état tournant du moteur, lequel module est configuré pour détecter un blocage en position au moins partiellement fermée d'un dispositif d'obturation d'admission du moteur.

Avantageusement, le dispositif comporte un organe indicateur lequel indique à un conducteur un état d'inhibition des redémarrages automatiques du moteur thermique lorsqu'un nombre maximal de redémarrages après calage autorisé est atteint.

Avantageusement, le dysfonctionnement du moteur occasionnant une instabilité permanente d'état tournant du moteur lequel dysfonctionnement est détecté par le module de détection de dysfonctionnement est une anomalie présentée par un organe du moteur, et le dispositif de commande de redémarrage automatique est configuré pour réduire le nombre maximal autorisé de redémarrages automatiques en cas de détection d'une telle anomalie présentée par un organe du moteur.

L'invention concerne également un moteur thermique de véhicule automobile comportant un tel dispositif de commande de redémarrage automatique.

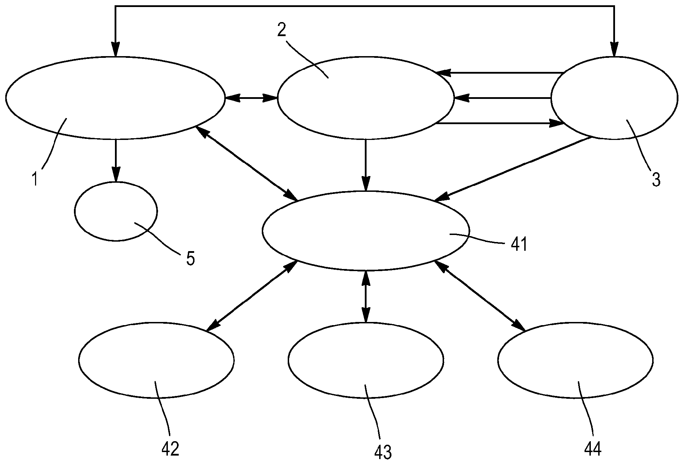

D'autres caractéristiques, buts et avantages de l'invention apparaitront à la lecture de la description détaillée qui va suivre, faite en référence à la figure unique annexée, qui est un diagramme représentatif du fonctionnement d'un dispositif de démarrage selon un mode de réalisation de l'invention.

Dans certains cas de vie, le moteur thermique peut caler à cause d'un problème transitoire par exemple parce qu'il fait plutôt froid et que les combustions sont instables ou encore parce que la régulation du moteur thermique a été fortement perturbée. C'est notamment le cas lors d'un freinage brutal du véhicule avec le moteur thermique relié au roues. Dans d'autres cas de vie le problème est permanent, par exemple lorsque le doseur du moteur diesel ou le papillon du moteur essence est bloqué en position fermée, par exemple en raison d'une commande débranchée accidentellement avec les vibrations du moteur thermique.

Par exemple en cas de doseur bloqué fermé ou bloqué dans une position non souhaitée telle que la quantité d'air admise est plus limitée que prévu, le moteur thermique peut, suite à un premier démarrage, arriver dans l'état tournant car l'ensemble des critères requis pour arriver dans cet état est satisfait simultanément, éventuellement après un temps faible de confirmation. Ensuite à cause d'une défaillance n'ayant pas eu d'influence sur la vérification de ces critères, ici doseur bloqué fermé, le moteur thermique aura du mal à produire des combustions satisfaisante et rester autonome. Le moteur thermique va alors caler. Sur calage du moteur thermique, celui-ci va être redémarré par un système automatique et ainsi de suite. Ce bouclage va provoquer une accumulation de carburant imbrulé dans les cylindres et/ou dans l'échappement. Cette accumulation de carburant peut exploser ou s'enflammer ultérieurement engendrant une dégradation ou une casse du moteur en particulier au niveau de l'échappement ou provoquer une accélération intempestive du véhicule car la combustion de ces résidus n'est absolument pas contrôlée.

Dans le cas où le nombre de redémarrages automatiques sur calage du moteur thermique est défini à une valeur maximale, alors ce nombre maximal peut-être trop faible pour les cas de calage MTH dû à une problématique transitoire d'instabilités après une mise en action du moteur thermique en climat très froid mais ce nombre peut être trop élevé pour les problèmes plus durables ou moins prévisibles comme les cas de doseur fermé ou d'injecteur encrassé. On retrouve alors un compromis entre l'augmentation de la disponibilité du groupe motopropulseur pour les calages récupérables par exemple en cas d'instabilité par moteur thermique froid et l'augmentation du risque de dégradation moteur ou d'accélération intempestive après un calage avec un problème permanent, par exemple en cas de doseur bloqué en position fermée.

Dans le dispositif décrit maintenant, sur un groupe motopropulseur hybride ou STT, on détermine en fonction de la détection d'anomalies ou de risques côté moteur thermique pouvant provoquer un mauvais fonctionnement de ce moteur thermique le nombre maximal de calages du moteur thermique pour lesquels un redémarrage automatique de ce moteur thermique aura lieu. Ce nombre maximal de redémarrages après calage étant défini au plus juste pour chaque cycle de roulage, cela permet d'optimiser le compromis entre l'augmentation de la disponibilité du groupe motopropulseur pour les calages du moteur thermique récupérables, par exemple par instabilité due à un moteur froid, et l'augmentation du risque de dégradation moteur ou d'accélération intempestive induit par des tentatives de redémarrage trop nombreuses après un calage dont la cause est permanente, par exemple par doseur bloqué en position fermée.

Sur la figure annexée, un gestionnaire des défauts et des reconfigurations 1 met en oeuvre une gestion des défauts classiquement utilisés dans les principaux calculateurs des véhicules modernes. Pour chaque défaillance signalée au gestionnaire des défauts et des reconfigurations 1, celui-ci applique une reconfiguration dans le contrôle commande via un ou plusieurs flux de reconfigurations et active également une interface homme-machine spécifique en cas de défaillance, laquelle sera décrite plus spécifiquement ci-après.

Un superviseur « Marche Arrêt MTH » référencé 2, après prise en compte de l'ensemble des requêtes et des contraintes, a pour rôle de décider de (re)démarrer le moteur thermique ou de l'arrêter via une consigne de marche MTH « cns_marche_MTH » transmise à un module de pilotage de démarrage qui sera décrit ci-après pour la gestion de l'entrainement du moteur thermique si besoin et à un module de pilotage du moteur thermique qui sera décrit ci-après. Ce superviseur 2 dispose en interne d'un diagnostic de calage du moteur thermique.

Le module de pilotage du moteur thermique, référencé 3 sur la figure, fournit un « Etat MTH » comprenant au moins deux états distincts, un état pour lequel le moteur thermique n'est pas pilotable en couple « MTH arrêté » et un état « MTH tournant » pour lequel le moteur thermique est capable de respecter convenablement une consigne de couple au vilebrequin. Le module de pilotage du moteur thermique 3 comprend également l'ensemble des fonctionnalités gérant la boucle d'air et les injections pour (re)démarrer ou arrêter le moteur thermique. Il procède à un (re)démarrage du moteur thermique si la consigne cns_marche_MTH est à vrai et que l'état du moteur thermique est différent de tournant et il procède à un arrêt du moteur thermique si la cns_marche_MTH est à faux et que l'état du moteur thermique est tournant. Le module de pilotage du moteur thermique 3 comprend également l'ensemble des fonctionnalités gérant la boucle d'air et les injections pour réaliser la consigne de couple élaborée par la structure couple si « Etat MTH= MTH tournant ». Le module de pilotage du moteur thermique 3 comprend également l'ensemble des fonctionnalités gérant la boucle d'air et les injections pour diagnostiquer des problèmes organiques tels que problèmes de doseur ou de capteurs et signaler les défauts au gestionnaire des défauts et des reconfigurations 1.

S'il y a un besoin d'entrainement du moteur thermique en vue de (re)démarrer le moteur thermique suite à l'apparition d'une consigne de marche du moteur thermique à vraie ou de la détection d'un calage du moteur thermique, un gestionnaire - ou manager selon la terminologie anglosaxone - d'organes de (re)démarrage du moteur thermique 41 choisit l'organe de (re)démarrage MTH le plus adéquat par rapport à la situation de vie. Par exemple pour un démarrage à moteur thermique froid lors de l'activation du groupe motopropulseur c'est-à-dire lors de sa mise en route, le démarreur sera utilisé de manière privilégiée par rapport à l'alterno-démarreur. En groupe motopropulseur actif c'est-à-dire pendant le cycle de roulage, le moteur thermique sera arrêté une fois le moteur thermique chaud donc pour des questions de prestations l'alterno-démarreur sera utilisé de manière privilégiée par rapport au démarreur ou à l'embrayage, ce dernier organe étant utilisable seulement en présence d'une vitesse suffisante du véhicule.

Le pilotage associé à chaque organe de (re)démarrage du moteur thermique est activé par le manager 41 des organes de démarrage. Ainsi, le manager 41 comprend une fonction 42 de pilotage de démarreur, une fonction 43 de pilotage d'alterno-démarreur, une fonction 44 de pilotage d'embrayage dans le cas d'un groupe motopropulseur comprenant une boite de vitesse pilotée à simple ou double embrayage. La désactivation est faite soit par le pilotage de manière indépendante, typiquement en cas de succès du (re)démarrage, soit par le pilotage du manager en cas de changement d'avis, typiquement sur perte des conditions de (re)démarrage par exemple suite à une coupure clé.

Dans le dispositif décrit maintenant, on détermine le nombre de calages maximum par cycle de roulage avant inhibition du procédé d'aide à la sortie de calage du moteur thermique par (re)démarrage automatique du moteur thermique en fonction de la présence du risque de non redémarrage du moteur thermique qui est lui reflété à travers la détection d'une ou plusieurs anomalies par le pilotage du moteur thermique. Cela permet d'optimiser le compromis entre l'augmentation de la disponibilité du groupe motopropulseur pour les calages récupérables par un redémarrage automatique et l'augmentation du risque de dégradation moteur ou d'accélération intempestive induit par des tentatives de (re)démarrage trop nombreuses après un calage dont la cause est permanente et entraine une surabondance de carburant imbrulé dans le moteur et la ligne d'échappement.

Lorsque le nombre de calages par cycle de roulage est atteint, le défaut calage MTH est confirmé en interne du gestionnaire des défauts et des reconfigurations 1 et les reconfigurations appliquées par le gestionnaire 1 auprès du module de pilotage des organes de redémarrage 41 et d'une interface homme-machine 5 permettent d'inhiber l'entrainement du moteur thermique présent normalement pour son redémarrage après calage grâce à une instruction de reconfiguration envoyée par le gestionnaire 1 au module de pilotage d'organes de redémarrage 41, et ils permettent en outre de signaler sur l'interface homme machine 5 un message spécifique du type « voyant STOP» grâce à une instruction de reconfiguration envoyée du gestionnaire 1 à l'interface homme-machine 5.

Dans l'implémentation explicitée ici, le nombre de calages maximum du moteur thermique par cycle de roulage est fixé indirectement par le diagnostic de détection de l'anomalie calage MTH via son nombre d'appels variable pour chaque anomalie et par le gestionnaire de diagnostic qui se charge de « confirmer le défaut » lorsqu'un niveau de confirmation calibrable est atteint. En effet pour chaque calage détecté du moteur thermique, le diagnostic va engendrer un nombre d'appels variable auprès du gestionnaire des défauts et des reconfigurations 1 en fonction de la présence d'un éventuel risque de non démarrage au moment de la détection, le risque de non démarrage étant signalé par le module de pilotage du moteur thermique 3 via le gestionnaire des défauts et des reconfigurations 1.

Pour cela, le présent mode de réalisation consiste à confirmer le défaut d'une manière spécifique telle qu'exposée ci-après. Ainsi, on considère ci-après un nombre de trois calages maximum tolérés par cycle de roulage en présence d'un risque de non (re)démarrage du moteur thermique, un nombre de sept calages maximum tolérés par cycle de roulage en l'absence d'un risque de non (re)démarrage du moteur thermique et une confirmation du défaut calage moteur thermique en interne du gestionnaire au bout de 8 appels du diagnostic de calage MTH.

A un instant T01 le contact est coupé et le groupe motopropulseur est au repos. A un instant T12 le contact est mis et le groupe motopropulseur est inactif. A un instant T23 le conducteur demande la mise en route de son groupe motopropulseur et en raison de la présence d'un besoin de démarrage du moteur thermique, présente obligatoirement sur un groupe motopropulseur STT mais facultative sur un groupe motopropulseur hybride, cette demande pouvant être due par exemple à niveau d'énergie alternative insuffisante pour débuter le cycle de roulage uniquement avec la motorisation alternative, une consigne de marche du moteur thermique à vraie est émise par le superviseur marche-arrêt 2. Le manager des organes de démarrage 41 s'occupe alors de sélectionner l'organe de démarrage adéquat lors de l'activation du groupe motopropulseur et active le pilotage dédié en conséquence. A un instant T34 le moteur thermique est tournant et on considère que les éventuelles motorisations alternatives sont prêtes également. Le groupe motopropulseur passe dans un état actif. Le cycle de roulage peut alors débuter car le groupe motopropulseur est apte à fournir du couple aux roues en fonction de la volonté du conducteur.

A un instant T45 toutes les conditions sont réunies pour arrêter temporairement le moteur thermique. Le superviseur marche-arrêt 2 émet une consigne de marche du moteur thermique à faux. A un instant T56 l'arrêt MTH est terminé car le régime moteur est stabilisé à une valeur nulle. A ce stade le pilotage du volet doseur ou papillon ayant servi à étouffer le moteur thermique doit ordonner une réouverture. Ici pour l'exemple il reste bloqué en position fermée par exemple en raison d'un grippage de l'axe du volet. Cette anomalie est détectée par un diagnostic du pilotage du moteur thermique à un instant T67 qui en informe le gestionnaire des défauts et des reconfigurations 1. Le gestionnaire 1 active à son tour un flux de reconfiguration « risque de non (re)démarrage MTH » associé à un flux de reconfiguration « demande de démarrage MTH dysfonctionnel » afin de tester dès que possible la démarrabilité du moteur thermique pour avertir le conducteur d'une défaillance le plus vite possible. En effet un moteur thermique qui ne démarre pas peut conduire à des situations dangereuses sur un véhicule STT ou hybride car il s'agit de la principale motorisation dans le cas hybride voire de l'unique motorisation dans le cas STT capable de fournir un couple aux roues.

A un instant T78 le moteur thermique semble tournant donc autonome pourtant il cale à nouveau à un instant T89. Le procédé de (re)démarrage automatique suite au calage qui consiste à ré-entrainer le moteur thermique par un organe de (re)démarrage est actif et permet de retrouver les conditions pour lesquelles le moteur thermique se déclare tournant à un instant T910. Malheureusement le moteur thermique cale à nouveau par manque d'air et le cycle se poursuit jusqu'au quatrième calage à un instant T1415.

Pendant la période allant de l'instant T67 à l'instant T1415 le moteur thermique s'est rempli de carburant imbrulé qui peut endommager le moteur thermique ou provoquer une accélération intempestive si le volet doseur venait à se ré-ouvrir. A T1415 le calage est détecté par le diagnostic fonctionnel calage moteur thermique et en raison de la présence du flux de « risque de non (re)démarrage MTH » le diagnostic émet deux appels vers le gestionnaire des défauts et des reconfigurations 1. Le défaut calage moteur thermique est ainsi confirmé en interne du gestionnaire 1 et à son tour le gestionnaire 1 active deux flux de reconfiguration. Un premier flux de reconfiguration inhibe le réentraînement automatique sur calage MTH, et un deuxième flux de reconfiguration active un voyant « STOP » auprès de l'interface homme-machine 5.

A un instant T1718 le conducteur coupe le contact, le groupe motopropulseur entre dans une phase de désactivation dans laquelle les éventuelles motorisations alternatives dans le cas d'un groupe motopropulseur hybride sont coupées. Au même moment l'état de confirmation du défaut «calage MTH» est réhabilité à 0 en interne du gestionnaire 1 afin d'autoriser lors du prochain cycle de roulage à nouveau jusqu'à sept calages donnant lieu à un redémarrage automatique ou trois calages en présence d'un risque de non (re)démarrage.

Selon un autre scénario, à un instant T01 le contact est coupé et le groupe motopropulseur est au repos. A un instant T12 le contact est mis et le groupe motopropulseur est inactif. A un instant T23 le conducteur demande la mise en route de son groupe motopropulseur et on considère pour l'exemple qu'en raison des températures très froides il y un besoin de démarrage du moteur thermique. Un moteur thermique très froid ne peut pas être démarré pendant le cycle de roulage pour des raisons de sécurité d'une part à cause de la durée pouvant être excessive du processus de démarrage et d'autre part à cause de l'incertitude concernant le succès de ce démarrage du moteur thermique. A un instant T34 le moteur thermique est tournant et dans le cas d'un groupe motopropulseur hybride on considère que les éventuelles motorisations alternatives sont prêtes également. Le groupe motopropulseur passe dans un état actif. Le cycle de roulage peut alors débuter car le groupe motopropulseur est apte à fournir du couple aux roues en fonction de la volonté du conducteur. Alors que le moteur thermique est tournant, les combustions du moteur thermique sont instables car la température est basse. Le carburant est un carburant « été » se vaporisant mal ce qui est donc inadapté à ces conditions de démarrage un peu froides et en outre les injecteurs sont un peu encrassés. Il s'en suit une succession de calages du moteur thermique détectés par le diagnostic de calage du moteur thermique. Cependant en l'absence du risque de non (re)démarrage identifié les quatre calages successifs constatés par le diagnostic calage moteur thermique ne permettent pas de confirmer le défaut calage MTH en interne du gestionnaire de défauts et de reconfigurations 1. C'est l'objectif recherché. A un instant T1213 le conducteur coupe le contact, le groupe motopropulseur entre dans une phase de désactivation dans laquelle les éventuelles motorisations alternatives dans le cas d'un groupe motopropulseur hybride sont coupées. Au même moment l'état de confirmation du défaut « calage MTH » est réhabilité à 0 en interne du gestionnaire de défauts et de reconfigurations 1 afin d'autoriser lors du prochain cycle de roulage à nouveau jusqu'à sept calages du moteur thermique donnant lieu à un redémarrage automatique du moteur thermique ou trois calages en présence d'un risque de non (re)démarrage.

Le diagnostic calage du moteur thermique fonctionne ici de la façon suivante. Le diagnostic de « calage MTH » comporte deux branches de détection distinctes. Dans un première branche, la détection de calage du moteur thermique est réalisée par une séquence d'états du moteur thermique et de la consigne de marche MTH. On détecte ainsi des calages du moteur thermique « confirmés ». La confirmation du calage du moteur thermique se fait par l'observation d'une séquence d'états du moteur thermique spécifique au calage, ici une sortie de l'état moteur thermique tournant vers un autre état, par exemple (re)démarrage moteur thermique en présence d'une consigne de marche MTH.

Selon une autre branche, on réalise une détection de calage du moteur thermique via l'état MTH, la consigne de marche MTH et le régime du moteur thermique. On détecte alors des calages du moteur thermique de type « en cours » ou «confirmé». La nuance entre calage MTH « en cours » et calage MTH « confirmé » est fonction de la calibration du critère régime inférieur à un seuil pendant une temporisation. La détection du calage du moteur thermique commence dès l'obtention de l'état MTH tournant en présence d'une consigne de marche MTH. L'absence de consigne de marche annule toute détection. La sortie de l'état moteur thermique tournant en présence d'une consigne de marche MTH est une condition nécessaire pour débuter la détection du calage. Ensuite, on considère qu'il y a calage du moteur thermique selon deux possibilités. Une première possibilité est que le critère « régime pendant temporisation » est décalibré. Alors tous les calages du moteur thermique y compris ceux pour lesquels le moteur thermique ne va pas caler car le moteur thermique arrive à redresser son régime et revenir dans l'état moteur thermique tournant sont considérés comme des calages du moteur thermique. Une deuxième possibilité est que le critère « régime pendant temporisation » est calibré. Alors seuls les calages du moteur thermique respectant ce critère sont considérés comme des calages du moteur thermique.

Le défaut « calage MTH » peut-être sujet à confirmation auprès du gestionnaire de diagnostics si l'on souhaite confirmer le défaut calage MTH seulement après un certain nombre de calages du moteur thermique successifs. Dans ce dernier cas, l'atteinte du seuil de confirmation du défaut peut-être accélérée en présence d'un flux de reconfiguration « risque de non redémarrage MTH » en effectuant plusieurs appels auprès du gestionnaire de diagnostics via une temporisation de maintien de détection de calage MTH « CoPtFH_tiFastDebDgoEngStall_C » pour une seule anomalie calage MTH. Le défaut peut être réhabilité en l'absence d'une consigne de marche MTH via une calibration « CoPtFH_bRstEngStallNoRunReq_C » et des calibrations adéquates côté gestionnaire de diagnostic.

Ainsi, le présent dispositif permet d'éviter, comme dans les procédés automatiques « usuels » d'aide au (re)démarrage MTH après un calage MTH, de mettre en oeuvre la même stratégie quelle que soit la cause du calage du moteur thermique. En effet que le calage soit dû à un problème transitoire ou à un problème permanent les procédés usuels tentent soit de (re)démarrer le moteur thermique « ad vitam aeternam » en fait jusqu'à l'intervention d'une protection organique pour éviter un échauffement excessif et dommageable de l'organe de (re)démarrage du moteur thermique ou jusqu'à épuisement de l'énergie utilisée par l'organe de (re)démarrage, par exemple jusqu'à épuisement de la batterie électrique, soit encore effectuent un nombre défini de tentatives de (re)démarrage automatique.

## Revendications

1. Dispositif de commande de redémarrage automatique de moteur thermique de véhicule automobile en cas de calage, le dispositif présentant un nombre maximal autorisé de redémarrages automatiques en cas de calages, **caractérisé en ce qu'**il comporte un module de détection (3) d'un dysfonctionnement du moteur dont la cause est permanente et qui occasionne un calage du moteur, le dispositif de commande de redémarrage étant configuré pour réduire (1,2,3) ledit nombre maximal autorisé de redémarrages automatiques avant atteinte d'un tel nombre maximal autorisé, le dispositif réduisant le nombre maximal autorisé (1,2) de redémarrages automatiques en cas de détection (3) d'un dysfonctionnement du moteur dont la cause est permanente et qui occasionne un calage du moteur.

2. Dispositif selon la revendication 1, **caractérisé en ce qu'**il comporte un module de détection de calage (2) apte émettre au moins un appel à un module de décompte (1) lequel module de décompte (1) compare un nombre d'appels effectués par le module de détection de calage (2) à un nombre maximal d'appels, l'atteinte du nombre maximal d'appels déclenchant une inhibition de redémarrage automatique.

3. Dispositif selon la revendication précédente, **caractérisé en ce que** le module de détection de calage (2) est configuré pour prendre en compte une détection (3) de dysfonctionnement du moteur dont la cause est permanente et qui occasionne un calage du moteur, le module de détection de calage (2) étant configuré pour émettre un nombre d'appels par détection de calage qui est supérieur au nombre d'appel(s) par détection de calage (2) en absence de détection (3) d'un tel dysfonctionnement.

4. Dispositif selon la revendication 2 ou la revendication 3, **caractérisé en ce que** le module de détection de calage (2) effectue un appel par détection de calage en absence de détection (3) de dysfonctionnement du moteur dont la cause est permanente et qui occasionne un calage du moteur, et effectue deux appels par détection de calage en cas de détection (3) d'un tel dysfonctionnement.

5. Dispositif selon l'une quelconque des revendications 2 à 4, **caractérisé en ce que** le module de détection de calage (2) est un superviseur de marche et d'arrêt du moteur thermique (2).

6. Dispositif selon l'une quelconque des revendications 2 à 5, **caractérisé en ce que** le module de décompte est un gestionnaire des défauts et des reconfigurations (1) lequel met en oeuvre une gestion des défauts du moteur par reconfiguration d'organes de commande (2,3) du moteur.

7. Dispositif selon l'une quelconque des revendications précédentes, **caractérisé en ce qu'**il comporte un module de détection (3) de dysfonctionnement du moteur dont la cause est permanente et qui occasionne un calage du moteur, lequel module (3) est configuré pour détecter un blocage en position au moins partiellement fermée d'un dispositif d'obturation d'admission du moteur.

8. Dispositif selon l'une quelconque des revendications précédentes, **caractérisé en ce qu'**il comporte un organe indicateur (5) lequel indique à un conducteur un état d'inhibition des redémarrages automatiques du moteur thermique lorsqu'un nombre maximal de redémarrages après calage autorisé est atteint.

9. Dispositif selon l'une quelconque des revendications précédentes, **caractérisé en ce que** le dysfonctionnement du moteur dont la cause est permanente et qui occasionne un calage du moteur, lequel dysfonctionnement est détecté par le module de détection de dysfonctionnement (3) est une anomalie présentée par un organe du moteur, et le dispositif de commande de redémarrage automatique est configuré pour réduire le nombre maximal autorisé (1,2) de redémarrages automatiques en cas de détection (3) d'une telle anomalie présentée par un organe du moteur.

10. Moteur thermique de véhicule automobile comportant un dispositif de commande de redémarrage automatique selon l'une quelconque des revendications précédentes.

## Patentansprüche

1. Vorrichtung zur Steuerung des automatischen Wiederanfahrens eines Kraftfahrzeug-Verbrennungsmotors im Fall eines Abwürgens, wobei die Vorrichtung eine maximale zulässige Anzahl automatischer Wiederanfahrvorgänge im Fall von Abwürgen gestattet, **dadurch gekennzeichnet, dass** sie ein Modul zum Erfassen (3) einer Funktionsstörung des Motors umfasst, deren Ursache dauerhaft ist und die ein Abwürgen des Motors verursacht, wobei die Steuervorrichtung des Wiederanfahrens konfiguriert ist, um die maximale Anzahl zulässiger automatischer Wiederanfahrvorgänge zu verringern (1, 2, 3), bevor eine solche maximale zulässige Anzahl erreicht wird, wobei die Vorrichtung die maximale zulässige Anzahl (1, 2) automatischer Wiederanfahrvorgänge in dem Fall von Erfassen (3) einer Funktionsstörung des Motors, deren Ursache dauerhaft ist und die ein Abwürgen des Motors verursacht, verringert.

2. Vorrichtung nach Anspruch 1, **dadurch gekennzeichnet, dass** sie ein Abwürgerfassungsmodul (2) umfasst, das geeignet ist, um mindestens einen Anruf zu einem Abwärtszählmodul (1) auszugeben, wobei das Abwärtszählmodul (1) eine Anzahl von Anrufen, die das Abwürgerfassungsmodul (2) ausgeführt hat, mit einer maximalen Anzahl von Anrufen vergleicht, wobei das Erreichen der maximalen Anzahl von Anrufen ein Verhindern des automatischen Wiederanfahrens auslöst.

3. Vorrichtung nach dem vorhergehenden Anspruch, **dadurch gekennzeichnet, dass** das Abwürgerfassungsmodul (2) konfiguriert ist, um eine Erfassung (3) einer Funktionsstörung des Motors zu berücksichtigen, deren Ursache dauerhaft ist und die ein Abwürgen des Motors verursacht, wobei das Abwürgerfassungsmodul (2) konfiguriert ist, um eine Anzahl von Anrufen pro Abwürgerfassung auszugeben, die größer ist als die Anzahl von Anruf(en) pro Abwürgerfassung (2) bei Fehlen von Erfassung (3) einer solchen Funktionsstörung.

4. Vorrichtung nach Anspruch 2 oder Anspruch 3, **dadurch gekennzeichnet, dass** das Abwürgerfassungsmodul (2) einen Anruf pro Abwürgerfassung bei Fehlen einer Funktionsstörungserfassung (3) des Motors, deren Ursache dauerhaft ist und die ein Abwürgen des Motors verursacht, ausführt, und zwei Anrufe pro Abwürgerfassung bei Erfassung (3) einer solchen Funktionsstörung ausführt.

5. Vorrichtung nach einem der Ansprüche 2 bis 4, **dadurch gekennzeichnet, dass** das Abwürgerfassungsmodul (2) ein Supervisor für Betrieb und Stoppen der Verbrennungsmaschine (2) ist.

6. Vorrichtung nach einem der Ansprüche 2 bis 5, **dadurch gekennzeichnet, dass** das Abwärtszählmodul ein Verwalter der Mängel und der Neukonfigurationen (1) ist, der eine Fehlerverwaltung des Motors durch Neukonfiguration von Steuerorganen (2, 3) des Motors umsetzt.

7. Vorrichtung nach einem der vorhergehenden Ansprüche, **dadurch gekennzeichnet, dass** sie ein Erfassungsmodul (3) einer Funktionsstörung des Motors umfasst, wobei das Modul (3) konfiguriert ist, um ein Blockieren in mindestens teilweise geschlossener Position einer Saugverschlussvorrichtung des Motors zu erfassen.

8. Vorrichtung nach einem der vorhergehenden Ansprüche, **dadurch gekennzeichnet, dass** sie ein Angabeorgan (5) umfasst, das einem Fahrer einen Verhinderungszustand der automatischen Wiederanfahrvorgänge des Verbrennungsmotors angibt, wenn eine zulässige maximale Anzahl von Wiederanfahrvorgängen nach Abwürgen erreicht ist.

9. Vorrichtung nach einem der vorhergehenden Ansprüche, **dadurch gekennzeichnet, dass** die Funktionsstörung des Motors, deren Ursache dauerhaft ist und die ein Abwürgen des Motors verursacht, die von dem Funktionsstörungserfassungsmodul (3) erfasst wird, eine Anomalie ist, die ein Organ des Motors aufweist, und dass die Vorrichtung zum automatischen Wiederanfahren konfiguriert ist, um die maximale zulässige Anzahl (1, 2) automatischer Wiederanfahrvorgänge bei Erfassen (3) einer solchen Anomalie, die ein Organ des Motors aufweist, zu verringern.

10. Kraftfahrzeug-Verbrennungsmotor, der eine Vorrichtung zur Steuerung des automatischen Wiederanfahrens nach einem der vorhergehenden Ansprüche umfasst.

## Claims

1. A motor vehicle combustion engine automatic restart control device in the event of it stalling, the device having a maximum authorized number of automatic restarts in the event of stalling, **characterized in that** it comprises a detection module (3) of a malfunctioning of the engine, the cause of which is permanent and which causes a stalling of the engine, the restart control device being configured to reduce (1,2,3) said maximum authorized number of automatic restarts before such a maximum authorized number is reached, the device reducing the maximum authorized number (1,2) of automatic restarts in the event of detection (3) of a malfunctioning of the engine, the cause of which is permanent, and which causes a stalling of the engine.

2. The device according to Claim 1, **characterized in that** it comprises a stalling detection module (2) able to emit at least one call to a counting module (1), which counting module (1) compares a number of calls carried out by the stalling detection module (2) with a maximum number of calls, the reaching of the maximum number of calls triggering a suppression of automatic restarting.

3. The device according to the preceding claim, **characterized in that** the stalling detection module (2) is configured to take into account a detection (3) of malfunctioning of the engine, the cause of which is permanent and which causes a stalling of the engine, the stalling detection module (2) being configured to emit a number of calls by detection of stalling which is greater than the number of call(s) by detection of stalling (2) in the absence of detection (3) of such a malfunctioning.

4. The device according to Claim 2 or Claim 3, **characterized in that** the stalling detection module (2) carries out a call by detection of stalling in the absence of detection (3) of malfunctioning of the engine, the cause of which is permanent and which causes a stalling of the engine, and carries out two calls by detection of stalling in the event of detection (3) of such a malfunctioning.

5. The device according to any one of Claims 2 to 4, **characterized in that** the stalling detection module (2) is a start and stop supervisor of the combustion engine (2).

6. The device according to any one of Claims 2 to 5, **characterized in that** the counting module is a manager of the faults and reconfigurations (1) which implements a management of the faults of the engine by reconfiguration of control members (2,3) of the engine.

7. The device according to any one of the preceding claims, **characterized in that** it comprises a detection module (3) of malfunctioning of the engine, the cause of which is permanent and which causes a stalling of the engine, which module (3) is configured to detect an at least partially closed locking in position of an intake closing device of the engine.

8. The device according to any one of the preceding claims, **characterized in that** it comprises an indicator member (5) which indicates to a driver a state of suppression of the automatic restarts of the combustion engine when an authorized maximum number of restarts after stalling is reached.

9. The device according to any one of the preceding claims, **characterized in that** the malfunctioning of the engine, the cause of which is permanent and which causes a stalling of the engine, which malfunctioning is detected by the malfunction detection module (3), is an anomaly presented by a member of the engine, and the automatic restart control device is configured to reduce the maximum authorized number (1,2) of automatic restarts in the event of detection (3) of such an anomaly presented by a member of the engine.

10. A motor vehicle combustion engine comprising an automatic restart control device according to any one of the preceding claims.
